# EUROPÄISCHE PATENTSCHRIFT

(11) **EP 0 309 738 B1**
(45) Veröffentlichungstag und Bekanntmachung des Hinweises auf die Patenterteilung: **10.02.1993**
(21) Anmeldenummer: 88113823.4
(22) Anmeldetag: 25.08.1988
(51) Int. Cl.: G05D 23/13, G01K 13/02

(54) **Elektrisch gesteuerte Mischarmatur**
Electrically regulated mixing valve
Robinet-mélangeur régulé par voie électrique

(30) Priorität: 29.09.1987 CH 3781/87
(43) Veröffentlichungstag der Anmeldung: 05.04.1989
(73) Patentinhaber: KWC AG, CH-5726 Unterkulm (CH)
(72) Erfinder: Blättler, Ernst, CH-8912 Obfelden (CH)
(74) Vertreter: Patentanwälte Schaad, Balass, Menzl & Partner AG

(56) Entgegenhaltungen:
- WO-A-81/01331
- CH-A- 329 423
- CH-A- 451 626
- DE-U- 8 520 484
- PATENT ABSTRACTS OF JAPAN, Band 10, Nr. 368 (M-543)[2425], 9. Dezember 1986; & JP-A-61 161 349 (MATSUSHITA ELECTRIC IND. CO. LTD) 22-07-1986

## Beschreibung

Die vorliegende Erfindung betrifft eine elektrisch gesteuerte Mischarmatur für warme und kalte Flüssigkeiten gemäss dem Oberbegriff des Anspruches 1.

Aus dem DE-Gebrauchsmuster G 8520484.6 ist ein Messkopf für die Temperaturmessung von strömenden Flüssigkeiten bekannt, bei dem die Flüssigkeiten durch zwei Zuflussöffnungen in tangentialer Richtung in einen ringspaltförmigen Strömungskanal geleitet werden. Der Strömungskanal ist in radialer Richtung innen von einem Hohlzylinder hoher Wärmeleitfähigkeit und aussen von einem Gehäuse aus Kunststoff begrenzt und seine Länge in Strömungsrichtung ist wesentlich grösser als seine lichte Weite in radialer Richtung. Am den Zuflussöffnungen entfernten Ende ist der Strömungskanal durch radiale Ausnehmungen mit der Bohrung im Hohlzylinder verbunden, die ihrerseits mit der Ausflussöffnung in Verbindung steht. Um die zugeführten Flüssigkeiten zu durchwirbeln und einen guten Wärmeübergang an dem Hohlzylinder sicherzustellen, ist dieser mit in den Strömungskanal vorstehenden, in Umfangsrichtung verlaufenden Prallplatten versehen. Im dickwandigen Hohlzylinder sind axiale Bohrungen vorgesehen, um mittels Thermoelementen die Temperatur des Hohlzylinders zu messen. Im ringspaltförmigen Strömungskanal werden also die beiden Flüssigkeiten durchwirbelt und durchmischt und durch die äussere und innere Umströmung des Hohlzylinders wird dieser auf eine Temperatur gebracht, die ungefähr der Temperatur des Mischwassers entspricht, das durch die Ausflussöffnung abfliesst. Mit diesem bekannten Messkopf ist eine sehr rasche und genaue Erfassung der Mischwassertemperatur infolge der Trägheit der Aufwärmung des Hohlzylinders und der örtlich vorhandenen Temperaturunterschiede nicht möglich.

Eine elektrisch gesteuerte Mischarmatur ist aus der CH-PS 451 626 bekannt. Diese weist einen Mischraum auf, dessen ungefähr quadratischer Querschnitt wesentlich grösser ist als die Zuflussöffnungen für das Kalt- und Warmwasser an den Enden des Mischraums. In Längsrichtung gesehen mittig zwischen diesen Zuflussöffnungen und diesen gegenüberliegend ist eine Ausflussöffnung für das Mischwasser vorgesehen und in den Mittelbereich des Mischraumes hinein ragt ein elektronischer Temperaturfühler. Das von den beiden Zuflussöffnungen in Richtung gegeneinander fliessende Wasser durchmischt sich im Mittelbereich der Mischkammer, wo der Temperaturfühler vorgesehen ist und fliesst durch die Auslassöffnung aus dem Mischraum.

Eine weitere elektrisch gesteuerte Mischarmatur ist in der JP-A-61-161349 offenbart. Diese weist einen Mischraum auf, in welchem das Kalt- und Warmwasser gegengleich gesteuert einfliesst. Aus diesem Mischraum wird das Mischwasser durch eine Oeffnung in einen Umsteuerraum geleitet, in welchem es entweder einer Duschbrause oder einem Wanneneinlauf zugeleitet wird. Das Temperaturmessorgan ist in dieser Oeffnung vorgesehen.

Es ist daher Aufgabe der vorliegenden Erfindung, eine elektrisch gesteuerte Mischarmatur zu schaffen, die in sehr kurzer Zeit ein Mischwasser der gewünschten Temperatur liefert und diese sehr genau über lange Zeit beibehalten und ausregulieren kann.

Diese Aufgabe wird durch die Merkmale des kennzeichnenden Teiles des Anspruches 1 gelöst.

In der Vormischstrecke wird die warme und kalte Flüssigkeit teilweise durchmischt. Die so vorgemischten Flüssigkeiten werden dann im spaltförmig verengten Strömungskanal flächenmässig ausgedehnt und die Temperatur an ihrer Oberfläche verteilt gemessen. Durch die flächenmässige Ausdehnung wird die Durchmischung weiter gefördert und ein erheblicher Temperaturgradient quer zur Oberfläche vermieden. Eine auf die Oberfläche verteilte Messung liefert folglich genaue Temperaturwerte, da örtliche Temperaturunterschiede an der Oberfläche mitberücksichtigt werden. Insbesondere ist eine genaue Temperaturmessung der Mischflüssigkeit möglich, bevor diese vollends durchmischt ist, was eine reaktionsschnelle Regelung der zugeführten Menge an kalter und warmer Flüssigkeit zulässt.

Ist der Strömungsquerschnitt im spaltförmig verengten Strömungskanal kleiner als die Summe der Querschnitte der Zuflussöffnungen, so werden die vorgemischten Flüssigkeiten beschleunigt, was die Durchmischung zusätzlich fördert und eine schnellere Messung ermöglicht.

Eine besonders platzsparende Ausbildungsform der Mischarmatur ist im Anspruch 5 angegeben.

Eine besonders gute Vormischung der Flüssigkeiten wird bei einer Ausbildungsform der Mischarmatur gemäss Anspruch 6 erzielt. Durch die Umlenkung der vorgemischten Flüssigkeiten am Rohrende wird die Durchmischung zusätzlich verbessert, was die Genauigkeit ebenfalls erhöht.

Das Messorgan kann am Mantelelement oder am Verdrängungskörper verteilt angeordnete Thermoelemente aufweisen. Dadurch wird die Temperatur der vorgemischten Flüssigkeiten flächendeckend im Strömungskanal ermittelt, was eine zuverlässige und äusserst genaue Einhaltung der Mischwassertemperatur ermöglicht.

Besondere Vorteile weist eine Mischarmatur auf, bei der als Messorgan ein Kaltleiter um das Mantelelement gewickelt oder im Verdrängungskörper an dessen Wand anliegend angeordnet ist. Eine solche Mischarmatur ist sehr einfach herstellbar und das Messorgan überdeckt eine grosse Fläche des Mantelelementes oder des Verdrängungskörpers, was ebenfalls eine äusserst genaue Temperaturerfassung begünstigt.

Weitere bevorzugte Ausführungsformen sind in den weiteren Ansprüchen angegeben.

Anhand der Zeichnungen werden nun Beispiele des Erfindungsgegenstandes näher erläutert. Es zeigen rein schematisch:
- Figur 1: einen Längsschnitt durch einen Teil einer ersten Ausführungsform einer Mischarmatur, bei der das Messorgan am Mantelelement angeordnet ist,
- Figur 2: einen Längsschnitt durch einen Teil einer Mischarmatur, bei der das Messorgan in einem Verdrängungskörper vorgesehen ist,
- Figur 3: einen Längsschnitt durch einen Teil einer Mischarmatur, bei der das Verdrängungsorgan durch ein Rohr gebildet ist, das die Vormischstrecke umschliesst und
- Figur 4: einen Längsschnitt durch einen Teil einer Mischarmatur mit einer Vorwärmstrecke für das Kaltwasser.

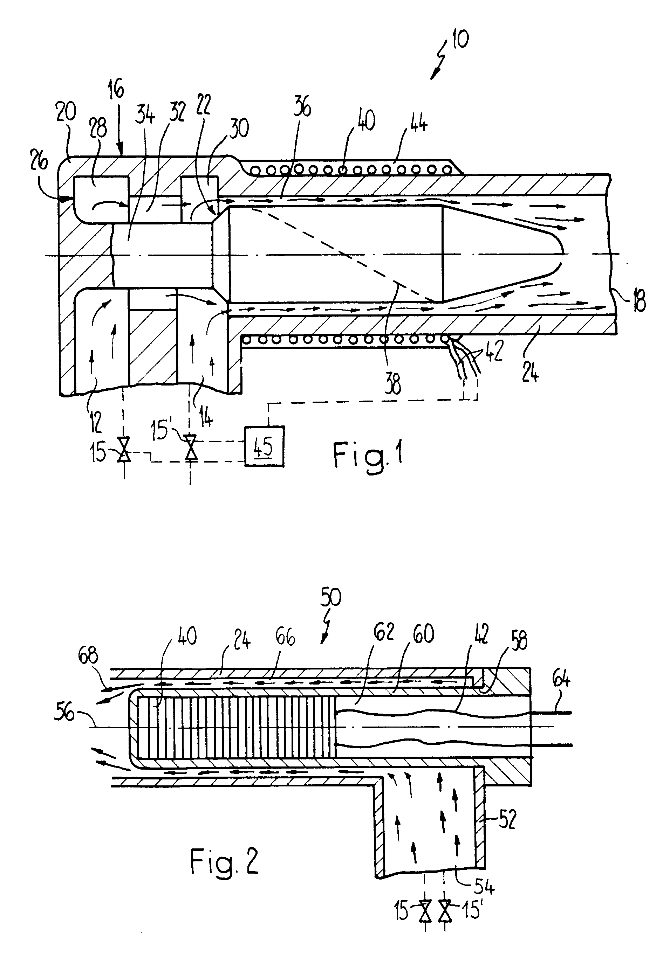

Figur 1 zeigt eine Mischarmatur 10, bei der Kalt- und Warmwasser durch je ein den Zuflussöffnungen 12,14 vorgeschaltetes Ventil 15,15′ in einen Sensorkörper 16 einfliesst und das Mischwasser durch eine Ausflussöffnung 18 den Sensorkörper 16 wieder verlässt. Der Sensorkörper 16 weist ein Zuflusselement 20, einen Verdrängungskörper 22 und ein dünnwandiges Mantelrohr 24 auf. In Axialrichtung des Mantelrohres 24 ist im Zuflusselement 20 eine Ausnehmung 26 vorgesehen, in die radial und parallel zueinander die beiden Zuflussöffnungen 12 und 14 münden. In der Ausnehmung 26 ist jeder Zuflussöffnung 12,14 eine ringförmige Erweiterung 28,30 zugeordnet, die strömungsmässig durch eine zentrische Oeffnung 32 miteinander verbunden sind.

Der zum Mantelrohr 24 koaxiale Verdrängungskörper 22 ist mittels eines Verdrängungsarmes 34, der die Ausnehmung 26 durchdringt, am Zuflusselement 20 befestigt. Zwischen dem Mantelrohr 24 und dem Verdrängungskörper 22 bildet sich ein Ringspalt 36, dessen Strömungsquerschnitt kleiner ist als die Summe der Querschnitte der beiden Zuflussöffnungen 12 und 14. Der Querschnitt des Verdrängungskörpers 22 ist im Bereich des Mantelrohres 24 über eine Länge, die ungefähr zweimal dem Innendurchmesser des Mantelrohres 24 entspricht, konstant und nimmt dann stromabwärts ab, so dass sein Ende stromlinienförmig ist. Mit der gestrichelten Linie 38 sind Rippen oder Nuten angedeutet, die am Verdrängungskörper 22 oder am Mantelrohr 24 angeordnet sein können und dem Wasser, das durch den Ringspalt 36 fliesst, eine Drehbewegung zur besseren Durchmischung vermitteln.

Im Bereich des Verdrängungskörpers 22 ist um das Mantelrohr 24 ein dünner Nickeldraht 40 spulenförmig gewickelt. Die freien Enden des Nickeldrahtes 40 sind mit 42 bezeichnet. Der Nickeldraht 40 ist im Bereich der spulenförmigen Wicklung von einem Kunststoffmantel 44 umschlossen, der einerseits den Nickeldraht 40 an die Aussenfläche des Mantelrohres 24 drückt und andererseits diesen temperaturmässig gegen die Umgebung isoliert. Mit den Pfeilen ist die Strömungsrichtung des Wassers angegeben.

Mit 45 ist eine Steuerung bezeichnet, die mit den Enden 42 des Nickeldrahtes 40 und den elektrischen Antrieben der Ventile 15,15′ verbunden ist. Ferner ist sie mit einem nicht dargestellten Eingabeorgan für die Vorwahl der Mischwassertemperatur verbunden.

Die Mischarmatur 10 und die Erfassung der Temperatur des Mischwassers funktioniert wie folgt: Bei geöffneten Ventilen 15,15′ fliesst durch die Zuflussöffnung 12 Kaltwasser und durch die Zuflussöffnung 14 Warmwasser in die Erweiterung 28 bzw.30 der Ausnehmung 26. Das Wasser wird in der Ausnehmung 26 in Axialrichtung umgelenkt und durchmischt sich bereits in der Erweiterung 30. Danach durchströmt das vorgemischte Wasser den Ringspalt 36. Da der Strömungsquerschnitt des Ringspaltes 36 kleiner ist als der gesamte Querschnitt der Zuflussöffnungen 12 und 14, hat das Wasser in diesem Bereich eine erhöhte Geschwindigkeit, was die Wärmeabgabe an das Mantelrohr 24 und somit an den Nickeldraht 40 verbessert. Eine dünnwandige Ausführung des Mantelrohres 24 erhöht ebenfalls die Uebertragungsgeschwindigkeit der Temperatur vom Wasser an den Nickeldraht 40. Der dünne Ringspalt 36 verbessert die Durchmischung des Wassers und das darin fliessende Wasser kann in radialer Richtung keinen oder nur einen sehr geringen Temperaturgradienten aufweisen. Dies verbessert die Genauigkeit der Temperaturmessung ganz erheblich. Schraubenförmige Nuten oder Rippen 38 verbessern zusätzlich die Durchmischung des Wassers.

Der Nickeldraht 40 ist ein sog. Kaltleiter, der in Abhängigkeit von der Temperatur seinen Widerstand ändert. Hat der Nickeldraht 40 beispielsweise bei 25°C einen Widerstand von 1000 Ω , dann steigt dieser Widerstand bei 35°C auf 1050 Ω und bei 50°C auf 1120 Ω. Eine einfache Widerstandsmessung erlaubt folglich die Messung der Temperatur des Mischwassers. Da das Wasser vor dem Eintritt in den Ringspalt 36 durchmischt und die Temperatur über eine grosse Fläche gemessen wird, ermöglicht diese Anordnung das Vorsehen des Messorganes nahe an jenem Bereich, in dem die Durchmischung des Wassers beginnt. Die Temperaturmessung ist folglich sehr schnell und trotzdem äusserst genau.

Die Steuerung 45 wertet die gemessene Temperatur aus und steuert nach Massgabe der vorgewählten Mischwassertemperatur die Ventile 15,15′ an.

Bei einer Mischarmatur 50 gemäss Fig.2 münden die Ausgänge der Ventile 15,15′ in einen erstem Rohrteil 52. Am den Zuflussöffnungen 54 entfernten Ende des Rohrteiles 52 ist das Mantelrohr 24 derart angeordnet, dass die Achsen des ersten Rohrteiles 52 und des Mantelrohres 24 sich rechtwinklig kreuzen. Am ersten Rohrteil 52 ist zentrisch zur Mantelrohrachse 56 ein Rohrwanddurchbruch 58 angeordnet, durch den ein Verdrängungskörper 60 eingeschoben ist. Die Länge des in das Innere des Mantelrohres 24 reichenden Verdrängungskörpers entspricht ungefähr dem dreifachen Innendurchmesser desselben. Der Verdrängungskörper 60 ist dünnwandig ausgebildet, so dass sich ein Hohlraum 62 bildet, in dem am stromabwärts gerichteten Ende, beginnend über ca die halbe Länge dieses Hohlraumes 62, die spulenförmige Wicklung aus Nickeldraht 40 angeordnet ist. Die freien Enden 42 des Nickeldrahtes 40 führen zu Anschlusstiften 64, die mit der in dieser Fig.2 nicht dargestellten Steuerung 45 verbunden sind (vgl.Fig.1), welche ebenfalls auf die dem ersten Rohrteil 52 vorgeschalteten Ventile 15,15′ einwirkt. Bei dieser Mischarmatur 50 wird das Wasser im ersten Rohrteil 52 vorgemischt, strömt quer zum Verdrängungskörper 60, wird dort umgelenkt und fliesst durch den vom Mantelrohr 24 und den Verdrängungskörper 60 gebildeten Ringspalt 66 zur Ausflussöffnung 68. Der Strömungsquerschnitt des Ringspaltes 66 ist um die Querschnittsfläche des Verdrängungskörpers 60 geringer als der Zuströmquerschnitt des ersten Rohrteiles 52. Durch die Umlenkung des Wassers sowie die erhöhte Geschwindigkeit im Ringspalt 66 erfolgt eine zusätzliche Durchmischung des Wassers und eine gute Uebertragung der Temperatur des Wassers an den Temperatursensor aus Nickeldraht 40. Die Funktionsweise des Nickeldrahtes 40 als Temperatursensor und die Wirkungsweise der Steuerung 45 ist weiter oben bereits beschrieben.

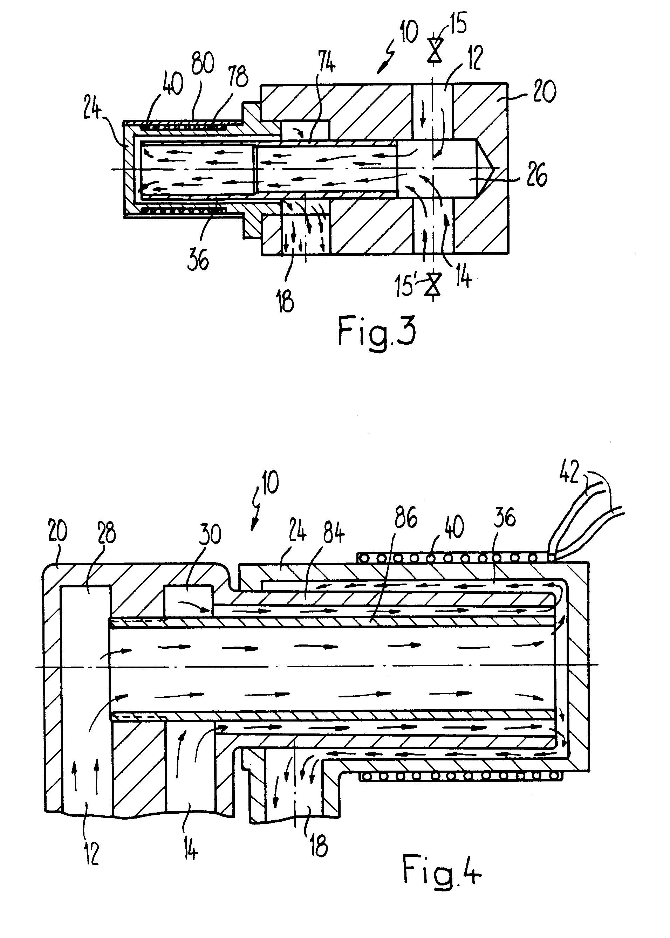

In den Figuren 3 und 4 sind funktionell gleiche Teile wie in Figur 1 mit denselben Bezugszeichen versehen.

In der Figur 3 ist eine Mischarmatur 10 dargestellt, bei der im Zuflusselement 20 zwei gegeneinander gerichtete Zuflussöffnungen 12,14 in einer rechtwinklig dazu verlaufenden Ausnehmung 26 enden. Den Zuflussöffnungen 12,14 sind die Ventile 15,15′ vorgeschaltet. In der Ausnehmung 26 ist ein Rohr 74 angeordnet, das über das Zuflusselement 20 vorsteht. Der über das Zuflusselement 20 vorstehende und den Zuflussöffnungen 12,14 entfernte Endbereich des Rohres 74 ist von einem koaxialen Mantelelement 24 umschlossen, das mit der Ausflussöffnung 18 in strömungsmässiger Verbindung steht. Am haubenförmigen Mantelelement 24 ist aussen eine zylinderförmige Vertiefung 78 angeordnet, in der wiederum der Nickeldraht 40 spulenförmig aufgewickelt ist. Der Nickeldraht 40 ist von einem metallenen Mantelblech 80 überdeckt und mit der nicht dargestellten Steuerung 45 verbunden.

Durch die beiden Zuflussöffnungen 12,14 wird Kalt- bzw. Warmwasser der Ausnehmung 26 zugeführt, in der eine erste Durchmischung des Wassers stattfindet. Das Mischwasser gelangt anschliessend durch die vom Rohr 74 begrenzte Vormischstrecke zum haubenförmigen Mantelelement 76, wird dort um 180° angelenkt und fliesst quasi im Gegenstrom durch den durch das Rohr 74 und das Mantelelement 76 begrenzten Ringspalt 36 zur Ausflussöffnung 18. Durch die Umlenkung des Wassers um 180° erfolgt eine besonders gute Durchmischung. Die Regelung der Ventile 15,15′ erfolgt in analoger Weise, wie dies zu Fig.1 beschrieben ist.

Die Mischarmatur 10 gem. Figur 4 ist eine Weiterbildung der Mischarmatur 10 gem. der Figur 1. Die Bezugszeichen in dieser Figur 4 entsprechen jenen der Figur 1 und auf sie wird nur noch insofern eingegangen, als dies für das Verständnis der Funktion dieser Mischarmatur 10 nötig ist. Im Zuflusselement 20 stehen nun die beiden mit den Zuflussöffnungen 12,14 strömungsmässig verbundenen Erweiterungen 28 bzw.30 nicht mehr miteinander in Verbindung. Im mit der Erweiterung 30 in Strömungsverbindung stehenden Rohrteil 84 ist koaxial ein weiteres thermisch gut leitendes Rohr 86 angeordnet, das die Erweiterung 28 mit dem stromabwärts liegenden Ende des Rohrteiles 84 strömungsmässig verbindet. Der Rohrteil 84 und das weitere Rohr 86 sind vom Zuflusselement 20 an stromabwärts von einem haubenförmigen Mantelelement 24 überdeckt, so dass der Ringspalt 36 zwischen dem Mantelelement 24 und dem Rohrteil 84 liegt. In dem Zuflusselement 20 zugekehrten Endbereich des Mantelelementes 24 ist an diesem die Ausflussöffnung 18 angeordnet. Um das Mantelelement 24 ist wiederum spulenförmig der Nickeldraht 40 gewickelt.

In dieser Mischarmatur 10 wird das durch die Zuflussöffnung 12 strömende warme Wasser von der Erweiterung 28 in das weitere Rohr 86 umgelenkt und das durch die Zuflussöffnung 14 strömende Kaltwasser fliesst unter Vorwärmung infolge des vom Warmwasser erwärmten Rohres 86 koaxial zwischen diesem Rohr 86 und dem Rohrteil 84 bis zu den fluchtenden Enden dieser beiden Rohre 84,86. Hier tritt es ringförmig aus und wird infolge des im Rohr 86 nachfliessenden Warmwassers unter Durchmischung radial nach aussen verdrängt und infolge des Mantelelementes 24 um 180° umgelenkt. Im Ringspalt 36 erfolgt eine zusätzliche Durchmischung und die Temperaturmessung des Wassers. Die Temperatur wird hier ebenfalls mittels des Nickeldrahtes 40 sehr nahe beim Mischpunkt erfasst.

Auch in den Ringspalten 36 der Armaturen gemäss Figur 2-4 können schraubenförmig gerichtete Nuten oder Rippen 38 angeordnet sein, wie dies in der Beschreibung zur Figur 1 angegeben ist. Diese sorgen für eine zusätzliche Durchmischung des Wassers.

Es ist auch einzusehen, dass das Messorgan nicht auf einen spulenförmig gewickelten Kaltleiter aus Nickeldraht 40 beschränkt ist. So können anstelle des Nickeldrahtes 40 am Mantelelement 24 und/oder im Verdrängungskörper 22,60 mehrere Thermoelemente verteilt angeordnet sein, von denen durch Summation oder Mittelwertbildung der Thermospannungen die Temperatur des Mischwassers angegeben werden kann.

Allen Mischarmaturen 10,70 gemäss den Figuren 1-4 ist gemeinsam, dass der Strömungsquerschnitt im Ringspalt 36 kleiner ist als der gesamte Querschnitt der Zuflussöffnungen 12,14,54 und dass das Messorgan, sei es ein Kaltleiter, Thermoelement oder eine andere Temperatursonde, im Bereich dieses Ringspalte 36 angeordnet ist.

In den Mischarmaturen 10,50 wird das fliessfähige Medium, hier Wasser, im Ringspalt flächenmässig ausgedehnt und die Temperatur an der vergrösserten Oberfläche gemessen. Zur besseren und vor allem schnelleren Uebertragung der Temperatur des Wassers an das Messorgan ist das Mantelelement 24 und/oder das Verdrängungsorgan 22,60 dünnwandig und aus einem Werkstoff mit guter Wärmeleitfähigkeit aufgebaut.

## Patentansprüche

1. Elektrisch gesteuerte Mischarmatur für warme und kalte Flüssigkeiten, insbesondere Warm- und Kaltwasser, mit Zuflussöffnungen (12,14,54) und einem von beiden Flüssigkeiten gemeinsam durchströmten spaltförmigen Strömungskanal (36,66), dessen Länge in Strömungsrichtung gesehen grösser ist als seine lichte Weite, und mit einem beim Strömungskanal (36,66) angeordneten Temperaturmessorgan (40), dadurch gekennzeichnet, dass dem Strömungkanal (36,66) eine Vormischstrecke (26,52,74) für die Flüssigkeiten vorgeschaltet und zum Erfassen der Temperatur der Mischflüssigkeit das Temperaturmessorgan (40) bei der Oberfläche des Strömungskanals (36,66) flächig verteilt angeordnet ist, und dass eine den Zuflussöffnungen (12,14,54) vorgeschaltete Ventilanordnung (15,15') für die Steuerung der Flüssigkeiten in Abhängigkeit von der gemessenen Temperatur der Mischflüssigkeit vorgesehen ist.

2. Mischarmatur nach Anspruch 1, dadurch gekennzeichnet, dass der Strömungskanal (36,66) ringspaltförmig ausgebildet ist.

3. Mischarmatur nach Anspruch 1 oder 2, dadurch gekennzeichnet, dass der Strömungsquerschnitt des Stromungskanals (36,66) kleiner ist als die Summe der Strömungsquerschnitte der Zuflussöffnungen (12,14,54).

4. Mischarmatur nach Anspruch 2 oder 3, dadurch gekennzeichnet, dass der Strömungskanal (36,66) in radialer Richtung von einem Verdrängungsorgan (22,60) und einem Mantelelement (24) begrenzt ist.

5. Mischarmatur nach Anspruch 4, dadurch gekennzeichnet, dass das Verdrängungsorgan ein Verdrängungskörper (22, 60) ist und das Temperaturmessorgan (40) am Verdrängungskörper (22,60) und/oder am Mantelelement (24) verteilt angeordnet ist.

6. Mischarmatur nach Anspruch 2 oder 3, dadurch gekennzeichnet, dass der ringspaltförmige Strömungskanal (36) in radialer Richtung innen von einem mit den Zuflussöffnungen (12,14) in Strömungsverbindung stehenden, die Vormischstrecke umhüllenden Rohr (36) und aussen wenigstens im den Zuflussöffnungen (12,14) entfernten Endbereich des Rohres (36) von einem haubenförmigen Mantelelement (24) begrenzt ist und das Temperaturmessorgan (40) am Mantelelement (24) angeordnet ist.

7. Mischarmatur nach einem der Ansprüche 4-6, dadurch gekennzeichnet, dass das Temperaturmessorgan (40) am Umfang des Mantelelementes (24) bzw. am Verdrängungskörper (22, 60) verteilt angeordnete Thermoelemente aufweist.

8. Mischarmatur nach einem der Ansprüche 4-6, dadurch gekennzeichnet, dass das Temperaturmessorgan (40) ein Kaltleiter, vorzugsweise ein Nickeldraht ist, der um das Mantelelement (24) gewickelt und/oder am Verdrängungskörper (22,60) an dessen Wand angeordnet ist.

9. Mischarmatur nach einem der Ansprüche 1-8, dadurch gekennzeichnet, dass am Mantelelement (24) und/oder Verdrängungsorgan (22,60) vorzugsweise schraubenförmige Rippen oder Nuten (38) angeordnet sind, um die Durchmischung des Mediums zu verbessern.

10. Mischarmatur nach einem der Ansprüche 1-9, dadurch gekennzeichnet, dass das Mantelelement (24) und/oder das Verdrängungsorgan (22,60) mindestens im Bereich des Temperaturmessorgans (40) dünnwandig ausgebildet sind bzw. ist und aus einem Werkstoff mit guter Wärmeleitfähigkeit besteht.

11. Mischarmatur nach einem der Ansprüche 1-3, dadurch gekennzeichnet, dass der Vormischstrecke eine Vorwärmestrecke für die kalte Flüssigkeit vorgeschaltet ist.

12. Mischarmatur nach Anspruch 11, dadurch gekennzeichnet, dass die Vorwärmstrecke durch die mittels eines thermisch leitenden Rohres (86) voneinander strömungsmässig getrennten koaxialen Zuflussöffnungen (12,14) gebildet und der ringspaltförmige Strömungskanal (36) im Bereich des Endes des Rohres (86) koaxial zur Vorwärmstrecke angeordnet ist.

## Claims

1. Electrically controlled mixer fitting for hot and cold liquids, in particular hot and cold water, having feed openings (12, 14, 54) and a gap-shaped flow duct (36, 66), which is jointly flowed through by both liquids and the length of which, viewed in the direction of flow, is greater than its clear width, and having a temperature measuring member (40) disposed next to the flow duct (36, 66), characterised in that a pre-mixing section (26, 52, 74) for the liquids is connected upstream from the flow duct (36, 66) and, for detecting the temperature of the mixed liquid, the temperature measuring member (40) is disposed areally distributed next to the surface of the flow duct (36, 66), and in that a valve arrangement (15, 15') is provided, connected upstream from the feed openings (12, 14, 54), for controlling the liquids as a function of the measured temperature of the mixed liquid.

2. Mixer fitting according to Claim 1, characterised in that the flow duct (36, 66) is designed in the shape of an annular gap.

3. Mixer fitting according to Claim 1 or 2, characterized in that the flow cross-section of the flow duct (36, 66) is smaller than the sum of the flow cross-sections of the feed openings (12, 14, 54).

4. Mixer fitting according to Claim 2 or 3, characterised in that the flow duct (36, 66) is limited in the radial direction by a displacement mechanism (22, 60) and a jacket element (24).

5. Mixer fitting according to Claim 4, characterised in that the displacement mechanism is a displacement body (22, 60) and the temperature measuring member (40) is disposed distributed on the displacement body (22, 60) and/or on the jacket element (24).

6. Mixer fitting according to Claim 2 or 3, characterised in that the annular gap shaped flow duct (36) is limited in the radial direction internally by a tube (36), which is in flow-connection with the feed openings (12, 14) and envelops the pre-mixing section, and externally, at least in the end area of the tube (36) which is remote from the feed openings (12, 14), by a hood-shaped jacket element (24) and the temperature measuring member (40) is disposed on the jacket element (24).

7. Mixer fitting according to one of Claims 4-6, characterised in that the temperature measuring member (40) has thermoelements which are disposed distributed on the periphery of the jacket element (24) or on the displacement body (22, 60).

8. Mixer fitting according to one of Claims 4-6, characterised in that the temperature measuring member (40) is a cold conductor, preferably a nickel wire, which is wound around the jacket element (24) and/or is disposed on the displacement body (22, 60) on its wall.

9. Mixer fitting according to one of Claims 1-8, characterised in that preferably screw-shaped ribs or grooves (38) are disposed on the jacket element (24) and/or on the displacement mechanism (22, 60), in order to improve the intermixing of the medium.

10. Mixer fitting according to one of Claims 1-9, characterised in that the jacket element (24) and/or the displacement mechanism (22, 60), at least in the area of the temperature measuring member (40), is/are of thin-walled design and consist(s) of a material having good heat-conductibility.

11. Mixer fitting according to one of Claims 1-3, characterised in that a pre-heating section for the cold liquid is connected upstream from the pre-mixing section.

12. Mixer fitting according to Claim 11, characterised in that the pre-heating section is formed by the coaxial feed openings (12, 14), which are separated from each another in flow terms by means of a thermally conducting tube (86), and the annular gap shaped flow duct (36) is disposed, in the area of the end of the tube (86), coaxially to the pre-heating section.

## Revendications

1. Robinet mitigeur à commande électrique pour liquides chauds et froids, notamment pour eau chaude et eau froide, possédant des orifices d'arrivée (12, 14, 54), un canal d'écoulement (36, 66) en forme de fente, qui est parcouru en commun par les deux liquides, et dont la longueur, mesurée dans le sens de l'écoulement, est supérieure à sa largeur libre, et un organe (40) de mesure de la température disposé dans le canal d'écoulement (36, 66), caractérisé en ce qu'en amont du canal d'écoulement (36, 66) est agencé un trajet de pré-mélange (26, 52, 74) des liquides, et que l'organe (40) de mesure de la température est réparti à la périphérie sur la surface du canal d'écoulement (36, 66) pour capter la température du liquide mélangé, et en ce qu'il est prévu un dispositif de distribution à clapets (15, 15') placé en amont des orifices d'arrivée (12, 14, 54) pour commander les liquides en fonction de la température mesurée du liquide mélangé.

2. Robinet mitigeur selon la revendication 1, caractérisé en ce que le canal d'écoulement (36, 66) est en forme de fente annulaire.

3. Robinet mitigeur selon la revendication 1 ou 2, caractérisé en ce que la section d'écoulement du canal d'écoulement (36, 66) est plus petite que la somme des sections d'écoulement des orifices d'arrivée (12, 14, 54).

4. Robinet mitigeur selon la revendication 2 ou 3, caractérisé en ce que le canal d'écoulement (36, 66) est limité dans la direction radiale par un organe de déplacement (22, 60) et un élément enveloppe (24).

5. Robinet mitigeur selon la revendication 4, caractérisé en ce que l'organe de déplacement est un corps de déplacement (22, 60) et l'organe (40) de mesure de la température est agencé réparti sur le corps de déplacement (22, 60) et/ou sur l'élément enveloppe (24).

6. Robinet mitigeur selon la revendication 2 ou 3, caractérisé en ce que, dans la direction radiale, le canal d'écoulement (36) en forme de fente annulaire est limité, intérieurement, par un tube (36) qui est en communication pour l'écoulement avec les orifices d'arrivée (12, 14) et qui entoure le trajet de pré-mélange et, extérieurement, du moins dans la région terminale du tube 36 qui est éloignée des orifices d'arrivée (12, 14), par un élément enveloppe (24) en forme de cloche, et l'organe (40) de mesure de la température est agencé sur l'élément enveloppe (24).

7. Robinet mitigeur selon une des revendications 4 à 6, caractérisé en ce que l'organe (40) de mesure de la température présente des thermo-éléments répartis sur la périphérie de l'élément enveloppe (24) ou sur le corps de déplacement (22, 60).

8. Robinet mitigeur selon une des revendications 4 à 6, caractérisé en ce que l'organe (40) de mesure de la température est un conducteur froid, de préférence un fil de nickel, qui est enroulé autour de l'élément enveloppe (24) et/ou disposé sur le corps de déplacement (22, 60), contre la paroi de ce dernier.

9. Robinet mitigeur selon une des revendications 1 à 8, caractérisé en ce que des nervures ou rainures (38), de préférence hélicoïdales, sont prévues sur l'élément enveloppe (24) et/ou sur l'organe de déplacement (22, 60) pour améliorer le mélange du fluide.

10. Robinet mitigeur selon une des revendications 1 à 9, caractérisé en ce que l'élément enveloppe (24) ou/et l'organe de déplacement (22, 60) est ou sont à paroi mince, du moins dans la région de l'organe (40) de mesure de la température, et est ou sont composé(s) d'une matière possédant une bonne conductibilité thermique.

11. Robinet mitigeur selon une des revendications 1 à 3, caractérisé en ce qu'un trajet de préchauffage du liquide froid est prévu en amont du trajet de prémélange.

12. Robinet mitigeur selon la revendication 11, caractérisé en ce que le trajet de préchauffage est formé par les orifices d'arrivée coaxiaux (12, 14), qui sont isolés l'un de l'autre pour l'écoulement par un tube (86) conducteur de la chaleur, et le canal d'écoulement (36) en forme de fente est disposé coaxialement au trajet de préchauffage dans la région de l'extrémité du tube (86).
